# EUROPÄISCHE PATENTANMELDUNG

(11) **EP 4 050 430 A1**
(43) Veröffentlichungstag der Anmeldung: **31.08.2022**
(21) Anmeldenummer: 21158982.5
(22) Anmeldetag: 24.02.2021
(51) Int. Cl.: G05B 9/02

(54) **STEUEREINRICHTUNG ZUM STEUERN EINES TECHNISCHEN SYSTEMS UND VERFAHREN ZUM KONFIGURIEREN DER STEUEREINRICHTUNG**

(71) Anmelder: Siemens Aktiengesellschaft, 80333 München (DE)
(72) Erfinder: Hein, Daniel, 81549 München (DE); Schöner, Holger, 81739 München (DE); Weber, Marc Christian, 80339 München (DE); Heesche, Kai, 81539 München (DE); Sterzing, Volkmar, 85579 Neubiberg (DE); Udluft, Steffen, 82223 Eichenau (DE)

(57) **Zusammenfassung**

Zum Konfigurieren einer Steuereinrichtung (CTL) für ein technisches System (TS) wird eine zustandsspezifische Sicherheitsinformation (SI) über eine Zulässigkeit eines Steueraktionssignals durch ein Sicherheitsmodul (SM) eingelesen. Weiterhin wird ein einen Zustand des technischen Systems (TS) angebendes Zustandssignal (ZS) in ein Maschinenlernmodul (NN) sowie in das Sicherheitsmodul (SM) eingespeist. Darüber hinaus wird ein Ausgabesignal (OS) des Maschinenlernmoduls (NN) in das Sicherheitsmodul (SM) eingespeist. Das Ausgabesignal (OS) wird durch das Sicherheitsmodul (SM) anhand der Sicherheitsinformation (SI) abhängig vom Zustandssignal (ZS) in ein zulässiges Steueraktionssignal (AS) umgesetzt. Weiterhin wird eine Performanz für ein Steuern des technischen Systems (TS) durch das zulässige Steueraktionssignal (AS) ermittelt, und das Maschinenlernmodul (NN) wird darauf trainiert, die Performanz zu optimieren. Die Steuereinrichtung (CTL) wird dann durch das trainierte Maschinenlernmodul (NN) konfiguriert.

## Beschreibung

Bei der Steuerung komplexer technischer Systeme, wie z. B. Robotern, Fertigungsanlagen, Gasturbinen, Windturbinen, Verbrennungskraftmaschinen oder Stromnetzen werden zunehmend Verfahren des maschinellen Lernens eingesetzt. Mittels derartiger Lernverfahren kann ein Maschinenlernmodell einer Steuereinrichtung anhand von Trainingsdaten darauf trainiert werden, ausgehend von aktuellen Betriebssignalen eines technischen Systems, diejenigen Steueraktionen zum Steuern des technischen Systems zu ermitteln, die spezifisch ein gewünschtes oder optimiertes Verhalten des technischen Systems bewirken und damit dessen Performanz optimieren. Ein derartiges Maschinenlernmodell zum Steuern eines technischen Systems wird häufig auch als Policy oder Steuermodell bezeichnet. Zum Trainieren einer solchen Policy steht eine Vielzahl bekannter Trainingsverfahren, wie z. B. Verfahren des bestärkenden Lernens zur Verfügung. Ein bestärkendes Lernen wird häufig auch als Reinforcement-Learning bezeichnet.

Bei der Anwendung lernbasierter Policies ist jedoch häufig nicht sichergestellt, dass die von der trainierten Policy ausgegebenen Steueraktionen vorgegebene Grenzwerte oder andere technische Nebenbedingungen in allen Situationen einhalten. Dies stellt vor allem bei sicherheitskritischen Anwendungen häufig ein Problem dar. Es ist bekannt, zur Vermeidung von Fehlsteuerungen die von der trainierten Policy ausgegebenen Steueraktionen zunächst zu validieren und das technische System nur mit validierten Steueraktionen anzusteuern. Eine auf diese Weise eingeschränkte Policy agiert jedoch in vielen Fällen nicht optimal.

Es ist Aufgabe der vorliegenden Erfindung, eine Steuereinrichtung zum Steuern eines technischen Systems sowie ein Verfahren zum Konfigurieren der Steuereinrichtung anzugeben, durch die sich eine Steuerung des technischen Systems verbessern lässt.

Gelöst wird diese Aufgabe durch ein Verfahren mit den Merkmalen des Patentanspruchs 1, durch eine Steuereinrichtung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Zum Konfigurieren einer Steuereinrichtung für ein technisches System wird eine für einen Zustand des technischen Systems spezifische Sicherheitsinformation über eine Zulässigkeit eines Steueraktionssignals durch ein Sicherheitsmodul eingelesen. Weiterhin wird ein einen Zustand des technischen Systems angebendes Zustandssignal in ein Maschinenlernmodul sowie in das Sicherheitsmodul eingespeist. Unter einem Signal sei hier und im Folgenden auch ein Datensignal, insbesondere ein numerisches Signal verstanden, das beispielsweise Gleitkommazahlen oder ganze Zahlen kodieren kann. Der Begriff Zustand kann vorzugsweise auch einen Zustandsbereich umfassen. Weiterhin wird ein Ausgabesignal des Maschinenlernmoduls in das Sicherheitsmodul eingespeist. Das Ausgabesignal wird durch das Sicherheitsmodul anhand der Sicherheitsinformation abhängig vom Zustandssignal in ein zulässiges Steueraktionssignal umgesetzt. Darüber hinaus wird eine Performanz für ein Steuern des technischen Systems durch das zulässige Steueraktionssignal ermittelt, und das Maschinenlernmodul wird darauf trainiert, die Performanz zu optimieren. Die Steuereinrichtung wird dann anhand des trainierten Maschinenlernmoduls dazu eingerichtet, das technische System anhand eines vom Sicherheitsmodul ausgegebenen, zulässigen Steueraktionssignals zu steuern.

Zum Ausführen des erfindungsgemäßen Verfahrens sind eine Steuereinrichtung, ein Computerprogrammprodukt sowie ein vorzugsweise nichtflüchtiges computerlesbares Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Durch die Erfindung kann das Maschinenlernmodul bereits in der Lernphase darauf trainiert werden, unter sicherheitsbedingten, durch das Sicherheitsmodul vorgenommenen Modifikationen von Steueraktionssignalen in optimierter Weise zu agieren. Unter einem Optimieren sei hier und im Folgenden auch eine Annäherung an ein Optimum verstanden. So kann in vielen Fällen ein sowohl sicherheitskonformer als auch optimierter Betrieb eines durch die erfindungsgemäß konfigurierte Steuereinrichtung gesteuerten technischen Systems gewährleistet werden. Darüber kann mittels der zustandsspezifischen Sicherheitsinformation auf einfache Weise spezifisches Expertenwissen und/oder Domänenwissen beim Trainingsprozess berücksichtigt werden.

Vorteilhafte Ausführungsformen und Weiterbildungen der Erfindung sind in den abhängigen Ansprüchen angegeben.

Nach einer vorteilhaften Ausführungsform der Erfindung kann zum Training des Maschinenlernmoduls ein Rückpropagationsverfahren verwendet werden. Bei diesem kann ein die Performanz quantifizierendes Performanzsignal von einem Ausgang des Sicherheitsmoduls zu einem Eingang des Sicherheitsmoduls und ein resultierendes Performanzsignal weiter von einem Ausgang des Maschinenlernmoduls zu einem Eingang des Maschinenlernmoduls rückpropagiert werden. Die Rückpropagation kann hierbei gewissermaßen durch das Sicherheitsmodul hindurch erfolgen. Eine Rückpropagation wird häufig auch als Backpropagation oder Fehlerrückführung bezeichnet. Im vorliegenden Fall kann das Performanzsignal als Fehlersignal rückpropagiert werden, mit dem Spezifikum, dass eine größere Performanz einem kleineren Fehler entspricht. Zur Ausführung von Rückpropagationsverfahren als solchen sind auf dem Gebiet des maschinellen Lernens viele effiziente Verfahren bekannt. Sofern eine Abbildung von Eingangssignalen auf Ausgangssignale des Sicherheitsmoduls und/oder des Maschinenlernmoduls differenzierbar ist, können gradientenbasierte Rückpropagationsverfahren, z. B. Gradientenabstiegsverfahren verwendet werden. Zu diesem Zweck kann eine durch das Sicherheitsmodul vorgenommene Umsetzung als differenzierbare Abbildung implementiert werden und so gewissermaßen gradientendurchlässig sein. Vorzugsweise kann das Sicherheitsmodul mittels eines TensorFlow-Graphen implementiert werden. Alternativ oder zusätzlich können auch gradientenfreie Rückpropagationsverfahren verwendet werden, wie z. B. genetische Optimierungsverfahren.

Nach einer weiteren vorteilhaften Ausführungsform kann durch das Sicherheitsmodul anhand der Sicherheitsinformation geprüft werden, ob das Ausgabesignal als Steueraktionssignal zulässig ist. Die Umsetzung des Ausgabesignals kann dann abhängig vom Prüfungsergebnis erfolgen. Die Prüfung kann anhand einer Beschreibung eines oder mehrerer Sicherheitskriterien erfolgen, die insbesondere einzuhaltende Grenzwerte oder Nebenbedingungen angeben. Eine solche Beschreibung kann in der Sicherheitsinformation kodiert oder angegeben sein.

Falls das Ausgabesignal als Steueraktionssignal zulässig ist, kann das Ausgabesignal durch das Sicherheitsmodul als zulässiges Steueraktionssignal ausgegeben werden. Andernfalls kann das Ausgabesignal in das zulässige Steueraktionssignal umgesetzt werden. Beispielsweise kann geprüft werden, ob ein Grenzwert eingehalten wird, und nur falls dies nicht der Fall ist, eine Umsetzung veranlasst werden.

Nach einer weiteren vorteilhaften Ausführungsform der Erfindung kann die Sicherheitsinformation ein zulässiges, zustandsspezifisches Default-Steueraktionssignal angeben oder kodieren. Das Ausgabesignal kann dann abhängig vom Prüfungsergebnis in das zulässige Default-Steueraktionssignal umgesetzt werden. Auf diese Weise kann eine Default-Ansteuerung und/oder ein Default-Verhalten des technischen Systems auch in Fällen gewährleistet werden, in denen kein vorteilhaftes oder sinnvolles Ausgabesignal erzeugt wird, oder die nur spärlich von Trainingsdaten abgedeckt sind.

Nach einer weiteren vorteilhaften Ausführungsform der Erfindung kann für einen durch das Zustandssignal spezifizierten Zustand des technischen Systems eine Menge von für diesen Zustand verfügbaren Trainingsdaten ermittelt werden. Die Prüfung auf Zulässigkeit des Ausgabesignals kann dann abhängig von der ermittelten Menge erfolgen. Grundsätzlich hängt ein Trainingserfolg eines Maschinenlernmodells stark von der verfügbaren Menge von Trainingsdaten ab. Es ist somit in der Regel zu erwarten, dass die aus einem nur spärlich von Trainingsdaten abgedeckten Zustand abgeleiteten Ausgabesignale des Maschinenlernmoduls mit einer verhältnismäßig großen Unsicherheit behaftet sind. Es erscheint somit vorteilhaft, Ausgabesignale für nur spärlich von Trainingsdaten abgedeckte Zustände des technischen Systems bevorzugt als unzulässig zu bewerten.

Entsprechend kann für einen durch das Zustandssignal spezifizierten Zustand ein Prognosefehler oder Modellierungsfehler des Maschinenlernmoduls ermittelt werden. Die Prüfung auf Zulässigkeit des Ausgabesignals kann dann abhängig vom ermittelten Prognosefehler oder Modellierungsfehler erfolgen. Insbesondere können Ausgabesignale für Zustände mit verhältnismäßig großem Prognose- oder Modellierungsfehler bevorzugt als unzulässig bewertet werden.

Ein Maß für eine Menge von zustandsspezifischen Trainingsdaten oder für einen zustandsspezifischen Prognose- oder Modellierungsfehler kann insbesondere auf direkte Weise oder mittels eines variationalen Autoenkoders, eines bayesschen neuronalen Netzes oder mittels bekannter clusterbasierter Verfahren ermittelt werden.

Nach einer weiteren vorteilhaften Ausführungsform der Erfindung kann durch die Sicherheitsinformation eine Transformationsfunktion konfiguriert, angegeben oder kodiert werden. In die Transformationsfunktion können das Ausgabesignal sowie das Zustandssignal eingespeist werden. Das Ausgabesignal kann dann mittels der Transformationsfunktion abhängig vom Zustandssignal in das zulässige Steueraktionssignal umgesetzt werden.

Weiterhin kann das technische System durch das zulässige Steueraktionssignal gesteuert werden, wobei ein Verhalten des so gesteuerten technischen Systems erfasst werden kann. Die Performanz kann dann aus dem erfassten Verhalten abgeleitet werden. Auf diese Weise kann z. B. eine Leistung oder ein Ertrag des technischen Systems gemessen und als Performanz ausgegeben werden.

Darüber hinaus kann ein Verhalten des durch das zulässige Steueraktionssignal gesteuerten technischen Systems simuliert, prädiziert und/oder aus einer Datenbank eingelesen werden. Die Performanz kann dann aus dem simulierten, prädizierten und/oder eingelesenen Verhalten abgeleitet werden.

Ein Ausführungsbeispiel der Erfindung wird nachfolgend anhand der Zeichnung näher erläutert. Dabei veranschaulichen jeweils in schematischer Darstellung:
- Figur 1: eine Gasturbine mit einer erfindungsgemäßen Steuereinrichtung,
- Figur 2: eine erfindungsgemäße Steuereinrichtung in einer Trainingsphase,
- Figur 3: eine Umsetzung eines Roh-Steueraktionssignals in ein zulässiges Steueraktionssignal, und
- Figur 4: ein weiteres Ausführungsbeispiel einer erfindungsgemäßen Steuereinrichtung in einer Trainingsphase.

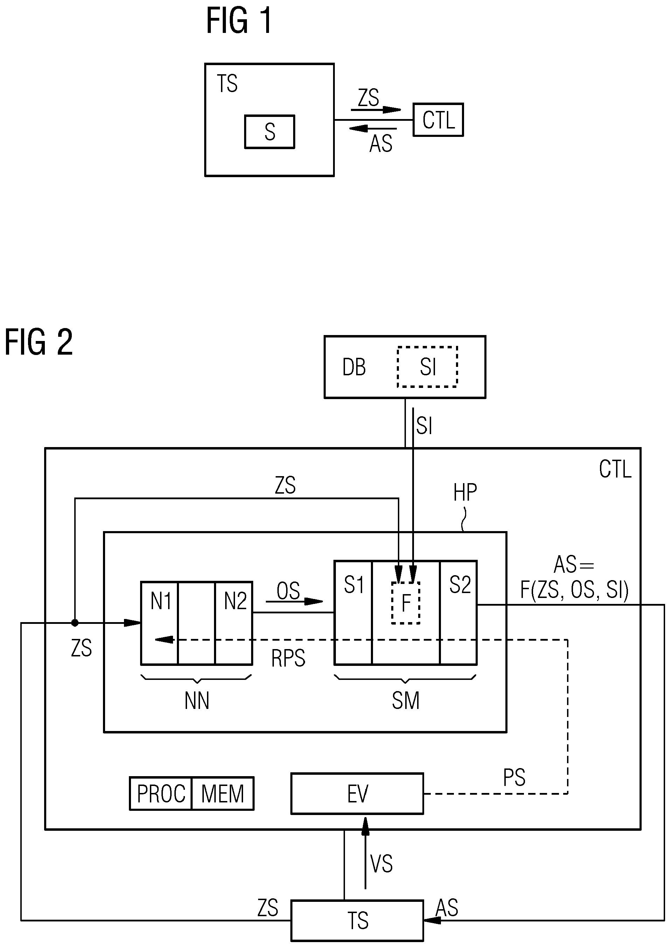

Figur 1 veranschaulicht beispielhaft eine Gasturbine als technisches System TS mit einer Steuereinrichtung CTL. Alternativ oder zusätzlich kann das technische System TS auch eine Windturbine, eine Verbrennungskraftmaschine, eine Fertigungsanlage, einen chemischen, metallurgischen oder pharmazeutischen Herstellungsprozess, einen Roboter, ein Kraftfahrzeug, ein Energieübertragungsnetz, einen 3D-Drucker oder eine andere Maschine, ein anderes Gerät oder eine andere Anlage umfassen. Die Steuereinrichtung CTL ist vorzugsweise als Maschinensteuerung ausgebildet.

Das technische System TS ist mit der Steuereinrichtung CTL gekoppelt, die als Teil des technischen Systems TS oder ganz oder teilweise extern zum technischen System TS implementiert sein kann. In den Figuren 1, 2 und 4 ist die Steuereinrichtung CTL aus Übersichtlichkeitsgründen extern zum technischen System TS dargestellt.

Die Steuereinrichtung CTL dient zum Steuern des technischen Systems TS und wurde zu diesem Zweck mittels eines maschinellen Lernverfahrens trainiert. Unter einem Steuern des technischen Systems TS sei hierbei auch ein Regeln des technischen Systems TS sowie eine Ausgabe und Verwendung von steuerungsrelevanten, d. h. zum Steuern des technischen Systems TS beitragenden Daten oder Signalen verstanden.

Derartige steuerungsrelevante Daten oder Signale können insbesondere Steueraktionssignale, Prognosedaten, Überwachungssignale, Zustandssignale und/oder Klassifikationsdaten umfassen, die insbesondere zur Betriebsoptimierung, Überwachung oder Wartung des technischen Systems TS und/oder zur Verschleiß- oder Beschädigungserkennung verwendet werden können.

Das technische System TS verfügt über Sensoren S, die fortlaufend einen oder mehrere Betriebsparameter des technischen Systems TS messen und als Messwerte ausgeben. Die Messwerte der Sensoren S sowie gegebenenfalls anderweitig erfasste Betriebsparameter des technischen Systems TS werden als Zustandssignale ZS vom technischen System TS zur Steuereinrichtung CTL übermittelt. Durch die Zustandssignale ZS wird insbesondere ein aktueller Zustand oder Zustandsbereich des technischen Systems TS angegeben, spezifiziert oder kodiert.

Die Zustandssignale ZS können insbesondere physikalische, chemische, regelungstechnische, wirkungstechnische und/oder bauartbedingte Betriebsparameter, Eigenschaftsdaten, Leistungsdaten, Wirkungsdaten, Verhaltenssignale, Systemdaten, Steuerdaten, Steueraktionssignale, Sensordaten, Messwerte, Umgebungsdaten, Überwachungsdaten, Prognosedaten, Analysedaten und/oder andere im Betrieb des technischen Systems TS anfallende und/oder einen Betriebszustand oder eine Steueraktion des technischen Systems TS beschreibende Daten umfassen. Dies können beispielsweise Daten über Temperatur, Druck, Emissionen, Vibrationen, Schwingungszustände oder Ressourcenverbrauch des technischen Systems TS sein. Speziell bei einer Gasturbine können die Betriebssignale BS eine Turbinenleistung, eine Rotationsgeschwindigkeit, Vibrationsfrequenzen, Vibrationsamplituden, Verbrennungsdynamiken, Verbrennungswechseldruckamplituden oder Stickoxidkonzentrationen betreffen.

Anhand der Zustandssignale ZS ermittelt die trainierte Steuereinrichtung CTL Steueraktionen, die eine Performanz des technischen Systems TS optimieren und gleichzeitig im aktuellen Zustand des technischen Systems TS zulässig sind. Die zu optimierende Performanz kann dabei insbesondere eine Leistung, einen Ertrag, eine Geschwindigkeit, eine Laufzeit, eine Präzision, eine Fehlerrate, ein Fehlerausmaß, einen Ressourcenbedarf, einen Wirkungsgrad, einen Schadstoffausstoß, eine Stabilität, einen Verschleiß, eine Lebensdauer und/oder andere Zielparameter des technischen Systems TS betreffen.

Die ermittelten, performanzoptimierenden und zulässigen Steueraktionen werden von der Steuereinrichtung CTL durch Übermittlung entsprechender zulässiger Steueraktionssignale AS zum technischen System TS veranlasst. Durch die Steueraktionssignale AS können z. B. bei einer Gasturbine eine Gaszufuhr, eine Gasverteilung oder eine Luftzufuhr eingestellt werden.

Figur 2 zeigt in schematischer Darstellung eine erfindungsgemäße, lernbasierte Steuereinrichtung CTL, vorzugsweise eine Maschinensteuerung in einer Trainingsphase. Die Steuereinrichtung CTL soll zum Steuern eines technischen Systems TS konfiguriert werden. Insofern in den Figuren die gleichen oder korrespondierende Bezugszeichen verwendet werden, bezeichnen diese Bezugszeichen die gleichen oder korrespondierende Entitäten.

Im vorliegenden Ausführungsbeispiel ist die Steuereinrichtung CTL an das technische System TS sowie an eine Datenbank DB gekoppelt. Die Steuereinrichtung CTL umfasst einen oder mehrere Prozessoren PROC zum Ausführen des erfindungsgemäßen Verfahrens sowie einen oder mehrere Speicher MEM zum Speichern von Verfahrensdaten.

Wie bereits im Zusammenhang mit Figur 1 beschrieben, werden einen jeweiligen aktuellen Zustand des technischen Systems TS spezifizierende Zustandssignale ZS vom technischen System TS zur Steuereinrichtung CTL übermittelt. Letztere ermittelt anhand der Zustandssignale ZS Steueraktionssignale AS, die im jeweiligen aktuellen Zustand des technischen Systems TS zulässig sind. Die zulässigen Steueraktionssignale AS werden von der Steuereinrichtung CTL zum technischen System TS übermittelt, um dieses in optimierter und sicherheitskonformer Weise zu steuern.

Die Zustandssignale ZS können zumindest teilweise auch von einem zum technischen System TS ähnlichen technischen System, von einer Datenbank mit gespeicherten Zustandssignalen des technischen Systems TS oder eines dazu ähnlichen technischen Systems und/oder von einer Simulation des technischen Systems TS oder eines dazu ähnlichen technischen Systems empfangen werden oder stammen.

Zur Optimierung der Steuerung wird ein durch die zulässigen Steueraktionssignale AS induziertes Verhalten des technischen Systems TS erfasst und in Form eines Verhaltenssignals VS kodiert, das vom technischen System TS zur Steuereinrichtung CTL übermittelt wird. Alternativ oder zusätzlich kann ein Verhaltenssignal VS auch Teil eines Zustandssignals ZS sein und/oder zumindest teilweise aus diesem extrahiert werden.

Ein Verhaltenssignal VS kann insbesondere eine Leistung, einen Ertrag, eine Geschwindigkeit, eine Laufzeit, eine Präzision, eine Fehlerrate, ein Fehlerausmaß, einen Ressourcenbedarf, einen Wirkungsgrad, einen Schadstoffausstoß, eine Stabilität, einen Verschleiß, eine Lebensdauer und/oder andere Zielparameter des technischen Systems TS spezifizieren. Speziell bei einer Gasturbine kann ein Verhaltenssignal VS Veränderungen von Verbrennungswechseldruckamplituden, eine Drehzahl oder eine Temperatur der Gasturbine spezifizieren. Als Verhaltenssignale VS können insbesondere für eine Performanz des technischen Systems TS relevante Zustandssignale des technischen Systems TS erfasst werden.

Im vorliegenden Ausführungsbeispiel umfasst die Steuereinrichtung CTL ein trainierbares Maschinenlernmodul NN, ein damit gekoppeltes Sicherheitsmodul SM sowie einen mit dem Sicherheitsmodul SM gekoppelten Performanzbewerter EV.

Die Zustandssignale ZS werden als Trainingsdaten für das Maschinenlernmodul NN verwendet und enthalten insbesondere Zustände des technischen Systems TS im Zeitverlauf spezifizierende Zeitreihen.

Das Maschinenlernmodul NN ist im vorliegenden Ausführungsbeispiel als künstliches neuronales Netz ausgestaltet, mit einer neuronalen Eingabeschicht N1 als Eingang des Maschinenlernmoduls NN und einer neuronalen Ausgabeschicht N2 als Ausgang des Maschinenlernmoduls NN. Das Maschinenlernmodul NN kann dabei insbesondere als oder mittels eines TensorFlow-Graphen implementiert werden.

Alternativ oder zusätzlich kann das Maschinenlernmodul ein rekurrentes neuronales Netz, ein faltendes neuronales Netz, ein bayessches neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell, einen Entscheidungsbaum und/oder einen Random-Forest verwenden oder implementieren. Für die angegebenen Varianten und deren Training steht eine Vielzahl von effizienten Implementierungen zur Verfügung.

Unter einem Training sei hierbei allgemein eine Optimierung einer Abbildung von Eingabesignalen auf Ausgabesignale verstanden. Diese Abbildung wird nach vorgegebenen, gelernten und/oder zu lernenden Kriterien während einer Trainingsphase optimiert. Als Kriterien können hierbei z. B. bei Prädiktionsmodellen ein Prädiktionsfehler, bei Klassifikationsmodellen ein Klassifikationsfehler oder bei Steuermodellen ein Erfolg oder eine Performanz einer Steueraktion herangezogen werden. Durch das Training können beispielweise Vernetzungsstrukturen von Neuronen des neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar. Insbesondere können Gradientenabstiegsverfahren, Partikelschwarmoptimierungen und/oder genetische Optimierungsverfahren verwendet werden.

Zum Training des Maschinenlernmoduls NN wird ein jeweiliges Zustandssignal ZS in die Eingabeschicht N1 des Maschinenlernmoduls NN eingespeist. Das Maschinenlernmodul NN erzeugt dann aus dem jeweiligen Zustandssignal ZS ein resultierendes Ausgabesignal OS, das in das Sicherheitsmodul SM eingespeist wird. Darüber hinaus wird in das Sicherheitsmodul SM auch das einen jeweiligen Zustand des technischen Systems TS spezifizierende Zustandssignal ZS eingespeist.

Das Sicherheitsmodul SM dient einerseits dem Zweck, zu prüfen, ob ein eingespeistes Signal, hier das Ausgabesignal OS, als Steueraktionssignal im jeweiligen Zustand des technischen Systems TS zulässig ist oder nicht. Andererseits soll das eingespeiste Signal durch das Sicherheitsmodul SM in ein im jeweiligen Zustand zulässiges Steueraktionssignal AS umgesetzt werden. Vorzugsweise erfolgt eine Umsetzung des eingespeisten Signals durch das Sicherheitsmodul SM nur dann, falls sich das eingespeiste Signal als unzulässig erweist. Andernfalls wird das eingespeiste Signal unverändert als zulässiges Steueraktionssignal AS ausgegeben.

Als Kriterien für eine Zulässigkeit eines Steueraktionssignals in einem jeweiligen Zustand können ein Einhalten von vorgegebenen zustandsspezifischen Grenzwerten oder anderen zustandsspezifischen Nebenbedingungen oder ein sicherheitskonformes Verhalten im Betrieb des technischen Systems TS vorgesehen sein.

Die vorgesehenen Zulässigkeitskriterien werden durch eine zustandsspezifische Sicherheitsinformation SI kodiert oder angegeben. Die Sicherheitsinformation SI ist im vorliegenden Ausführungsbeispiel in der Datenbank DB, beispielsweise in Form einer Konfigurationsdatei gespeichert und wird durch das Sicherheitsmodul SM eingelesen. Durch die Sicherheitsinformation SI wird das Sicherheitsmodul SM konfiguriert.

Die Sicherheitsinformation SI kann zustandsspezifische Regeln, Bedingungen und/oder Grenzwerte für Steueraktionssignale oder für ein sicherheitskonformes Verhalten des technischen Systems TS umfassen; beispielsweise maximale oder minimale Werte oder Änderungsgeschwindigkeiten von Betriebs- oder Steuerparametern. So kann durch das Sicherheitsmodul SM geprüft werden, ob im aktuellen Zustand ein Grenzwert für einen Betriebsparameter bei Anwendung eines eingespeisten Steueraktionssignals überschritten würde oder nicht. Bei Überschreitung kann das eingespeiste Steueraktionssignal umgesetzt werden, andernfalls nicht. Auf diese Weise kann explizites Expertenwissen oder Domänenwissen beim Training des Maschinenlernmoduls NN berücksichtigt werden.

Alternativ oder zusätzlich kann die Prüfung auf Zulässigkeit in einem jeweiligen Zustand auch abhängig von der Menge an Trainingsdaten erfolgen, die für diesen Zustand verfügbar sind. Darüber hinaus kann die Prüfung auf Zulässigkeit in einem jeweiligen Zustand auch abhängig von einem Prognose- oder Modellierungsfehler des Maschinenlernmoduls NN in diesem Zustand ausgeführt werden.

Weiterhin wird durch das Sicherheitsmodul SM eine dort implementierte Transformationsfunktion F zum Umsetzen von eingespeisten Signalen in zulässige Steueraktionssignale durch die Sicherheitsinformation SI konfiguriert. Im vorliegenden Ausführungsbeispiel ist die Transformationsfunktion F als Funktion des Zustandssignals ZS, des eingespeisten Signals, hier OS, sowie der Sicherheitsinformation SI implementiert und gibt ein im betreffenden Zustand zulässiges Steueraktionssignal, hier AS, zurück gemäß AS = F(ZS, OS; SI).

Wie oben beschrieben, kann durch die Transformationsfunktion F zunächst geprüft werden, ob das eingespeiste Signal OS zulässig ist. Falls dies der Fall ist, wird das eingespeiste Signal OS unverändert als zulässiges Steueraktionssignal AS ausgegeben, andernfalls erfolgt eine Umsetzung. Bei der Umsetzung können dann beispielsweise grenzwertüberschreitende Signalteile begrenzt werden, oder es kann ein Default-Steueraktionssignal ausgegeben werden.

Für das vorliegende Ausführungsbeispiel sei angenommen, dass die Transformationsfunktion F eine differenzierbare Abbildung vom eingespeisten Signal OS nach dem ausgegeben Signal AS vermittelt.

Das Sicherheitsmodul SM umfasst vorzugsweise eine Abfolge von mehreren hintereinander geschalteten Schichten, die beispielsweise als oder mittels eines TensorFlow-Graphen implementiert werden können. Im vorliegenden Ausführungsbeispiel verfügt das Sicherheitsmodul SM über eine Eingabeschicht S1 als Eingang des Sicherheitsmoduls SM sowie über eine Ausgabeschicht S2 als Ausgang des Sicherheitsmoduls SM. Das Sicherheitsmodul SM kann insbesondere als Filter oder Modifikator für Steueraktionssignale aufgefasst werden.

Mittels des Sicherheitsmoduls SM soll das Maschinenlernmodul NN im Sinne eines Reinforcement-Learning darauf trainiert werden, ein Ausgabesignal OS auszugeben, das nach eventueller Umsetzung durch das Sicherheitsmodul SM das technische System TS in einer Weise steuert, die dessen Performanz optimiert. Das Ausgabesignal OS kann in dieser Hinsicht gewissermaßen als Roh-Steueraktionssignal aufgefasst werden.

Im Rahmen des Trainings wird das technische System TS durch das vom Sicherheitsmodul SM ausgegebene Steueraktionssignal AS gesteuert. Ein durch diese Steuerung induziertes Verhalten des technischen Systems TS wird in Form des Verhaltenssignals VS kodiert. Letzteres wird zur Steuereinrichtung CTL übermittelt und dort in den Performanzbewerter EV eingespeist.

Der Performanzbewerter EV dient dem Zweck, für eine jeweilige Steueraktion eine Performanz des durch diese Steueraktion ausgelösten Verhaltens des technischen Systems TS anhand des Verhaltenssignals VS zu ermitteln. Die Performanz kann hierbei wie im Zusammenhang mit Figur 1 erläutert, definiert sein.

Zu diesem Zweck wird das Verhaltenssignal VS durch den Performanzbewerter EV vorzugsweise mittels einer sog. Belohnungsfunktion ausgewertet. Die Belohnungsfunktion ermittelt und quantifiziert hierbei die Performanz eines aktuellen Systemverhaltens als Belohnung. Eine solche Belohnungsfunktion wird häufig auch als Kostenfunktion, Verlustfunktion, Zielfunktion, Reward-Function oder Value-Function bezeichnet.

Alternativ oder zusätzlich kann die Performanz auch aus einem simulierten oder prädizierten Verhalten des technischen Systems TS abgeleitet werden. Darüber hinaus kann ein Verhalten des technischen Systems TS auch aus einer Datenbank eingelesen werden. Beispielsweise mittels einer zustandsspezifischen und steueraktionsspezifischen Datenbankabfrage.

Vorzugsweise wird durch den Performanzbewerter EV eine in die Zukunft diskontierte Performanz ermittelt. Hierbei wird eine gewichtete Summe zukünftiger Performanzwerte mit in Richtung der Zukunft abfallenden Gewichtungsfaktoren gebildet.

Neben dem Verhaltenssignal VS kann der Performanzbewerter EV auch einen Betriebszustand, eine aktuelle Steueraktion und/oder einen oder mehrere Sollwerte für ein Systemverhalten bei der Auswertung berücksichtigen.

Wie oben bereits angedeutet, können als Maß für die Performanz insbesondere eine Leistung, ein Ertrag, eine Geschwindigkeit, eine Laufzeit, eine Präzision, eine Fehlerrate, ein Fehlerausmaß, ein Ressourcenbedarf, ein Wirkungsgrad, ein Schadstoffausstoß, eine Stabilität, ein Verschleiß, eine Lebensdauer und/oder andere Zielparameter des technischen Systems TS herangezogen werden.

Die ermittelte Performanz wird durch den Performanzbewerter EV in Form eines Performanzsignals PS quantifiziert. Mittels des Performanzsignals PS soll das Maschinenlernmodul NN darauf trainiert werden, die Performanz zu optimieren. Zu diesem Zweck stehen grundsätzlich eine Vielzahl von maschinellen Lernverfahren, insbesondere Verfahren des bestärkenden Lernens und Rückpropagationsverfahren zur Verfügung. Im vorliegenden Fall wird ein an sich bekanntes Rückpropagationsverfahren in besonders effizienter Weise an ein Training des mit dem Sicherheitsmodul SM gekoppelten Maschinenlernmoduls NN angepasst.

Zum Zwecke des Trainings wird das Performanzsignal PS vom Performanzbewerter EV zum Sicherheitsmodul SM übermittelt und dort in die Ausgabeschicht S2 eingespeist. Insofern die Transformationsfunktion F eine differenzierbare Abbildung vermittelt, kann das Performanzsignal PS von der Ausgabeschicht S2 zur Eingabeschicht S1 durch Anwendung bekannter und effizienter gradientenbasierter Rückpropagationsverfahren rückpropagiert werden. Das Performanzsignal PS kann dabei als Fehlersignal rückpropagiert werden, mit dem Spezifikum, dass eine größere Performanz einem kleineren Fehler entspricht. Bei der Rückpropagation durch das Sicherheitsmodul SM werden dessen Umsetzverhalten und Prüfungsverhalten nicht verändert, sondern nur das rückpropagierte Performanzsignal.

Das resultierende, zur Eingabeschicht S1 rückpropagierte Performanzsignal RPS wird anschließend in die Ausgabeschicht N2 des Maschinenlernmoduls NN eingespeist. Von der Ausgabeschicht N2 wird das resultierende Performanzsignal RPS durch Anwendung bekannter gradientenbasierter Rückpropagationsverfahren weiter zur Eingabeschicht N1 rückpropagiert. Auch hierbei kann das resultierende Performanzsignal RPS als Fehlersignal rückpropagiert werden, mit dem Spezifikum, dass eine größere Performanz einem kleineren Fehler entspricht. Mittels der Rückpropagation wird das Maschinenlernmodul NN trainiert, indem im Zuge der Rückpropagation Lernparameter, wie z. B. neuronale Gewichte des Maschinenlernmoduls NN hinsichtlich des Trainingsziels einer maximalen Performanz optimiert werden. Anders als beim Sicherheitsmodul SM wird also ein Umsetzverhalten des Maschinenlernmoduls NN durch die Rückpropagation verändert.

Insofern das Sicherheitsmodul SM und das Maschinenlernmodul NN mittels TensorFlow-Graphen implementiert sind, kann die Rückpropagation in einer TensorFlow-Umgebung auf einfache und bestimmungsgemäße Weise ausgeführt werden.

Durch das Training des Maschinenlernmoduls NN wird die Steuereinrichtung CTL konfiguriert. Die Hintereinanderschaltung des trainierten Maschinenlernmoduls NN und des nachgeschalteten Sicherheitsmoduls SM kann als hybride Policy HP aufgefasst werden, die abhängig von dem in die hybride Policy HP eingespeisten Zustandssignal ZS nur zulässige und performanzoptimierende Steueraktionssignale AS ausgibt. Die so trainierte bzw. konfigurierte Steuereinrichtung CTL kann dann wie im Zusammenhang mit Figur 1 beschrieben, zum optimierten und sicherheitskonformen Steuern des technischen Systems TS verwendet werden.

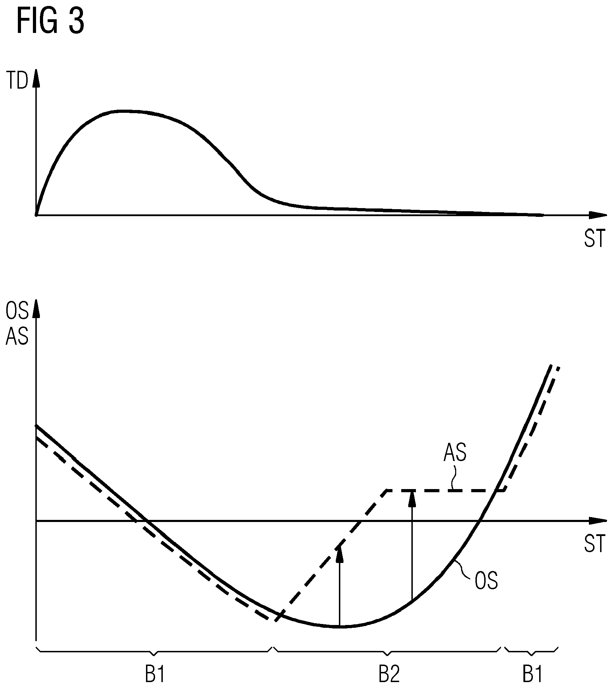

Figur 3 veranschaulicht eine Umsetzung eines Roh-Steueraktionssignals OS in ein zulässiges Steueraktionssignal AS durch das Sicherheitsmodul SM anhand von zwei Diagrammen.

Im oberen Diagramm ist eine Menge TD von für einen jeweiligen Zustand ST verfügbaren Trainingsdaten gegen den jeweiligen Zustand ST schematisch aufgetragen. Ein jeweiliger Zustand ST kann hierbei insbesondere durch einen jeweiligen Wert eines Zustandssignals, beispielsweise einen Schadstoffwert oder einen Drehzahlwert, dargestellt werden.

Im rechten Zustandsbereich sind offenbar nur sehr wenige Trainingsdaten verfügbar. Es ist also nicht zu erwarten, dass das Maschinenlernmodul NN in diesem Zustandsbereich optimierte oder auch nur vorteilhafte Steueraktionssignale AS ausgibt.

Im unteren Diagramm sind das Ausgabesignal OS als Roh-Steueraktionssignal sowie das aus dessen Umsetzung durch das Sicherheitsmodul SM resultierende, zulässige Steueraktionssignal AS jeweils gegen den Zustand ST aufgetragen. Das Ausgabesignal OS und das zulässige Steueraktionssignal AS stimmen in Zustandsbereichen B1 überein und differieren in einem Zustandsbereich B2.

Im Zustandsbereich B2 wurde durch das Sicherheitsmodul SM anhand der Sicherheitsinformation SI einerseits detektiert, dass nur verhältnismäßig wenige Trainingsdaten verfügbar sind. Andererseits wurde ermittelt, dass bei ungefilterter Anwendung des Ausgabesignals OS auf das technische System TS ein kritischer oder anderweitig unzulässiger Systemzustand erreicht würde. Infolgedessen wird das Ausgabesignal OS durch das Sicherheitsmodul SM im Zustandsbereich B2 modifiziert, um so ein zulässiges Steueraktionssignal AS zu erhalten. Im vorliegenden Fall wird das Ausgabesignal OS durch eine zustandsabhängige Verschiebung von dessen Signalwerten modifiziert.

In den Zustandsbereichen B1 wurde das Ausgabesignal OS dagegen durch das Sicherheitsmodul SM als zulässig bewertet und wird infolgedessen unverändert als zulässiges Steueraktionssignal AS ausgegeben.

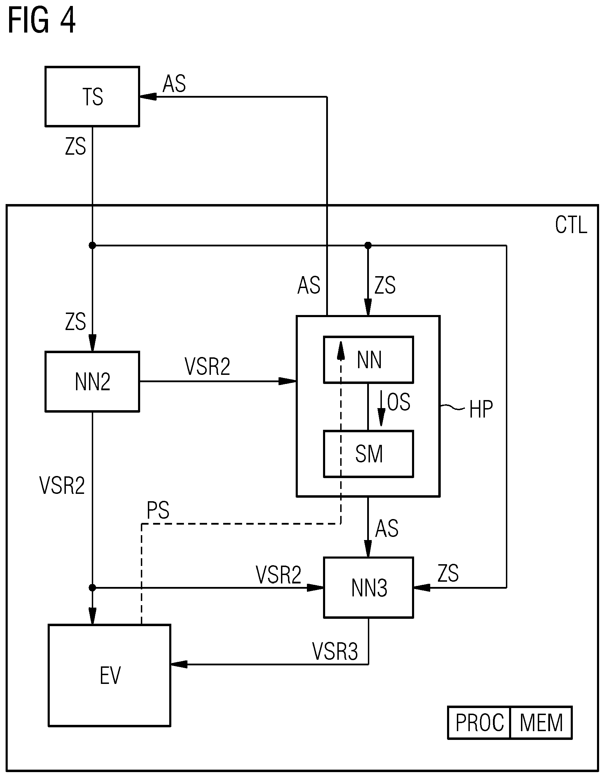

Figur 4 zeigt in schematischer Darstellung ein weiteres Ausführungsbeispiel einer erfindungsgemäßen Steuereinrichtung CTL in einer Trainingsphase. Durch das Training soll die Steuereinrichtung CTL zum Steuern des technischen Systems TS konfiguriert werden. Dabei soll eine hybride Policy HP darauf trainiert werden, anhand eines Zustandssignals ZS des technischen Systems TS ein performanzoptimierendes und zulässiges Steueraktionssignal AS zum Steuern des technischen Systems TS zu generieren. Die hybride Policy HP umfasst dabei ein zu trainierendes Maschinenlernmodul NN sowie ein nachgeschaltetes Sicherheitsmodul SM, die vorzugsweise wie oben beschrieben implementiert sind und agieren. Auch das Training des Maschinenlernmoduls NN im spezifischen Zusammenwirken mit dem Sicherheitsmodul SM erfolgt vorzugsweise wie oben ausgeführt.

Zum Training der hybriden Policy HP empfängt die Steuereinrichtung CTL vom technischen System TS Zustandssignale ZS des technischen Systems TS als Trainingsdaten. Zu diesem Training werden darüber hinaus ein zweites Maschinenlernmodul NN2 sowie ein drittes Maschinenlernmodul NN3 verwendet.

Das zweite Maschinenlernmodul NN2 wurde vorab vorzugsweise mit Standardverfahren des überwachten Lernens darauf trainiert, anhand eines Zustandssignals ZS des technischen Systems TS ein Verhalten des technischen Systems TS zu prädizieren oder zu reproduzieren, das sich ohne aktuelle Anwendung einer Steueraktion entwickeln würde. Dieses Training kann beispielsweise so erfolgen, dass durch Zustandssignale ZS induzierte Ausgabesignale des zweiten Maschinenlernmoduls NN2 mit tatsächlichen, ohne aktuelle Anwendung einer Steueraktion entstandenen Verhaltenssignalen des technischen Systems TS verglichen werden. Das zweite Maschinenlernmodul NN2 kann dann so optimiert werden, dass eine Abweichung zwischen den induzierten Ausgabesignalen und den tatsächlichen Verhaltenssignalen minimiert wird.

Das trainierte zweite Maschinenlernmodul NN2 kann damit anhand eines Zustandssignals ZS ein Verhaltenssignal VSR2 des technischen Systems TS, wie es ohne aktuelle Anwendung einer Steueraktion entstehen würde, mit hoher Genauigkeit reproduzieren.

Das dritte Maschinenlernmodul NN3 wurde vorab vorzugsweise mit Standardverfahren des überwachten Lernens darauf trainiert, anhand eines Steueraktionssignals AS und eines Zustandssignals ZS des technischen Systems TS ein durch eine jeweilige Steueraktion induziertes Verhalten des technischen Systems TS zu prädizieren oder zu reproduzieren. Dieses Training kann beispielsweise so erfolgen, dass durch Steueraktionssignale AS und Zustandssignale ZS induzierte Ausgabesignale des dritten Maschinenlernmoduls NN3 mit tatsächlichen steueraktionsinduzierten Verhaltenssignalen des technischen Systems TS verglichen werden. Das dritte Maschinenlernmodul NN3 kann dann so optimiert werden, dass eine Abweichung zwischen den induzierten Ausgabesignalen und den tatsächlichen steueraktionsinduzierten Verhaltenssignalen minimiert wird.

Das trainierte dritte Maschinenlernmodul NN3 kann damit anhand eines Steueraktionssignals AS und eines Zustandssignals ZS ein steueraktionsinduziertes Verhaltenssignal VSR3 des technischen Systems TS mit hoher Genauigkeit reproduzieren. Vorzugsweise können beim Training und bei der Anwendung des dritten Maschinenlernmoduls NN3 zusätzlich die Verhaltenssignale VSR2 des zweiten Maschinenlernmoduls NN2 als Eingabedaten verwendet werden. Dies erhöht in der Regel eine Prädiktionsgenauigkeit des dritten Maschinenlernmoduls NN3.

Im vorliegenden Ausführungsbeispiel ist beim Training des Maschinenlernmoduls NN das Training der Maschinenlernmodule NN2 und NN3 bereits abgeschlossen.

Neben den Maschinenlernmodulen NN, NN2 und NN3 umfasst die Steuereinrichtung CTL weiterhin einen Performanzbewerter EV, der mit den Maschinenlernmodulen NN, NN2 und NN3 gekoppelt ist und vorzugsweise wie oben beschrieben implementiert ist und agiert. Darüber hinaus ist das zweite Maschinenlernmodul NN2 mit den Maschinenlernmodulen NN und NN3 und das dritte Maschinenlernmodul NN3 mit dem Maschinenlernmodul NN gekoppelt.

Der Performanzbewerter EV dient, wie oben bereits angedeutet, dazu, für eine jeweilige Steueraktion eine Performanz des durch diese Steueraktion ausgelösten Verhaltens des technischen Systems TS anhand von Verhaltenssignalen zu ermitteln. Im vorliegenden Ausführungsbeispiel wird die Performanz anhand von prädizierten Verhaltenssignalen VSR2 und VSR3 ermittelt. Die Performanz wird durch den Performanzbewerter EV in Form eines Performanzsignals PS quantifiziert.

Zum Training des Maschinenlernmoduls NN werden die Zustandssignale ZS als Eingabesignale in die trainierten Maschinenlernmodule NN2 und NN3, in das zu trainierende Maschinenlernmodul NN sowie in das Sicherheitsmodul SM eingespeist.

Anhand der Zustandssignale ZS reproduziert das trainierte zweite Maschinenlernmodul NN2 ein Verhaltenssignal VSR2 des technischen Systems TS, wie es ohne aktuelle Anwendung einer Steueraktion entstehen würde. Das reproduzierte Verhaltenssignal VSR2 wird vom zweiten Maschinenlernmodul NN2 in das Maschinenlernmodul NN, in das dritte Maschinenlernmodul NN3 sowie in den Performanzbewerter EV eingespeist.

Ein aus den Zustandssignalen ZS und den reproduzierten Verhaltenssignalen VSR2 resultierendes Ausgabesignal OS des Maschinenlernmoduls NN wird weiterhin in das Sicherheitsmodul SM eingespeist, das das Ausgabesignal OS - wie oben beschrieben - in ein zulässiges Steueraktionssignal AS umsetzt. Letzteres wird in das trainierte dritte Maschinenlernmodul NN3 als Eingabesignal eingespeist. Anhand des zulässigen Steueraktionssignal AS, des reproduzierten Verhaltenssignals VSR2 sowie der Zustandssignale ZS reproduziert das trainierte dritte Maschinenlernmodul NN3 ein steueraktionsinduziertes Verhaltenssignal VSR3 des technischen Systems TS, das vom trainierten dritten Maschinenlernmodul NN3 in den Performanzbewerter EV eingespeist wird.

Der Performanzbewerter EV quantifiziert anhand des reproduzierten Verhaltenssignals VSR3 unter Berücksichtigung des reproduzierten Verhaltenssignals VSR2 eine aktuelle Performanz des technischen Systems TS. Dabei wird vorzugsweise eine Abweichung zwischen dem steueraktionsinduzierten Verhaltenssignal VSR3 und dem Verhaltenssignal VSR2 ermittelt. Anhand dieser Abweichung kann durch den Performanzbewerter EV bewertet werden, wie sich ein Systemverhalten mit Anwendung einer Steueraktion vom Systemverhalten ohne Anwendung dieser Steueraktion unterscheidet. Es erweist sich, dass die Performanzbewertung durch diese Unterscheidung in vielen Fällen erheblich verbessert werden kann.

Das resultierende, die Performanz quantifizierende Performanzssignal PS wird, wie in Figur 4 durch einen strichlierten Pfeil angedeutet, zur hybriden Pollicy HP zurückgeführt und dort, wie oben ausgeführt, durch das Sicherheitsmodul SM und das Maschinenlernmodul NN rückpropagiert. Anhand des rückpropagierten Performanzsignals PS wird das Maschinenlernmodul NN darauf trainiert, die Steueraktionsperformanz zu maximieren. Zur Maximierung der Steueraktionsperformanz können, wie oben mehrfach erwähnt, eine Vielzahl von bekannten Rückpropagationsverfahren und Optimierungsverfahren verwendet werden.

Indem neben den Zustandssignalen ZS auch das reproduzierte Verhaltenssignal VSR2 zum Training des Maschinenlernmoduls NN verwendet wird, kann letzteres besonders effektiv trainiert werden, da dem Maschinenlernmodul NN eine spezifische Information über ein steueraktionsloses Systemverhalten zur Verfügung steht.

Durch das Training des Maschinenlernmoduls NN wird die Steuereinrichtung CTL dazu eingerichtet, das technische System TS mittels des Steueraktionssignals AS der trainierten hybriden Policy HP in sowohl zulässiger als auch performanzoptimierender Weise zu steuern.

## Patentansprüche

1. Computerimplementiertes Verfahren zum Konfigurieren einer Steuereinrichtung (CTL) für ein technisches System (TS), wobei
a) eine für einen Zustand des technischen Systems (TS) spezifische Sicherheitsinformation (SI) über eine Zulässigkeit eines Steueraktionssignals durch ein Sicherheitsmodul (SM) eingelesen wird,
b) ein einen Zustand des technischen Systems (TS) angebendes Zustandssignal (ZS) in ein Maschinenlernmodul (NN) sowie in das Sicherheitsmodul (SM) eingespeist wird,
c) ein Ausgabesignal (OS) des Maschinenlernmoduls (NN) in das Sicherheitsmodul (SM) eingespeist wird,
d) das Ausgabesignal (OS) durch das Sicherheitsmodul (SM) anhand der Sicherheitsinformation (SI) abhängig vom Zustandssignal (ZS) in ein zulässiges Steueraktionssignal (AS) umgesetzt wird,
e) eine Performanz für ein Steuern des technischen Systems (TS) durch das zulässige Steueraktionssignal (AS) ermittelt wird,
f) das Maschinenlernmodul (NN) darauf trainiert wird, die Performanz zu optimieren, und
g) die Steuereinrichtung (CTL) anhand des trainierten Maschinenlernmoduls (NN) dazu eingerichtet wird, das technische System (TS) anhand eines vom Sicherheitsmodul (SM) ausgegebenen, zulässigen Steueraktionssignals (AS) zu steuern.

2. Verfahren nach Anspruch 1, **dadurch gekennzeichnet,**
**dass** zum Training des Maschinenlernmoduls (NN) ein Rückpropagationsverfahren verwendet wird, bei dem ein die Performanz quantifizierendes Performanzsignal (PS) von einem Ausgang (S2) des Sicherheitsmoduls (SM) zu einem Eingang (S1) des Sicherheitsmoduls (SM) und ein resultierendes Performanzsignal (RPS) weiter von einem Ausgang (N2) des Maschinenlernmoduls (NN) zu einem Eingang (N1) des Maschinenlernmoduls (NN) rückpropagiert wird.

3. Verfahren nach einem der vorhergehenden Ansprüche, **dadurch gekennzeichnet,**
**dass** durch das Sicherheitsmodul (SM) anhand der Sicherheitsinformation (SI) geprüft wird, ob das Ausgabesignal (OS) als Steueraktionssignal zulässig ist, und
**dass** das Ausgabesignal (OS) abhängig vom Prüfungsergebnis in das zulässige Steueraktionssignal (AS) umgesetzt wird.

4. Verfahren nach Anspruch 3, **dadurch gekennzeichnet, dass** falls das Ausgabesignal (OS) als Steueraktionssignal zulässig ist, das Ausgabesignal (OS) durch das Sicherheitsmodul (SM) als zulässiges Steueraktionssignal (AS) ausgegeben wird, und andernfalls das Ausgabesignal (OS) in das zulässige Steueraktionssignal (AS) umgesetzt wird.

5. Verfahren nach Anspruch 3 oder 4, **dadurch gekennzeichnet, dass** die Sicherheitsinformation (SI) ein zulässiges, zustandsspezifisches Default-Steueraktionssignal angibt oder kodiert, und
dass das Ausgabesignal (OS) abhängig vom Prüfungsergebnis in das zulässige Default-Steueraktionssignal umgesetzt wird.

6. Verfahren nach einem der Ansprüche 3 bis 5, **dadurch gekennzeichnet,**
**dass** für einen durch das Zustandssignal (ZS) spezifizierten Zustand eine Menge von für diesen Zustand verfügbaren Trainingsdaten ermittelt wird, und
**dass** die Prüfung auf Zulässigkeit des Ausgabesignals (OS) abhängig von der ermittelten Menge erfolgt.

7. Verfahren nach einem der Ansprüche 3 bis 6, **dadurch gekennzeichnet,**
**dass** für einen durch das Zustandssignal (ZS) spezifizierten Zustand ein Prognosefehler oder Modellierungsfehler des Maschinenlernmoduls (NN) ermittelt wird, und
**dass** die Prüfung auf Zulässigkeit des Ausgabesignals (OS) abhängig vom ermittelten Prognosefehler oder Modellierungsfehler erfolgt.

8. Verfahren nach einem der vorhergehenden Ansprüche, **dadurch gekennzeichnet,**
**dass** durch die Sicherheitsinformation (SI) eine Transformationsfunktion (F) konfiguriert, angegeben oder kodiert wird, dass das Ausgabesignal (OS) sowie das Zustandssignal (ZS) in die Transformationsfunktion (F) eingespeist werden, und
**dass** das Ausgabesignal (OS) mittels der Transformationsfunktion (F) abhängig vom Zustandssignal (ZS) in das zulässige Steueraktionssignal (AS) umgesetzt wird.

9. Verfahren nach einem der vorhergehenden Ansprüche, **dadurch gekennzeichnet,**
**dass** das technische System (TS) durch das zulässige Steueraktionssignal (AS) gesteuert wird,
**dass** ein Verhalten des so gesteuerten technischen Systems (TS) erfasst wird, und
**dass** die Performanz aus dem erfassten Verhalten abgeleitet wird.

10. Verfahren nach einem der vorhergehenden Ansprüche, **dadurch gekennzeichnet,**
**dass** ein Verhalten des durch das zulässige Steueraktionssignal (AS) gesteuerten technischen Systems (TS) simuliert, prädiziert und/oder aus einer Datenbank eingelesen wird, und
**dass** die Performanz aus dem simulierten, prädizierten und/oder eingelesenen Verhalten abgeleitet wird.

11. Steuereinrichtung (CTL) zum Steuern eines technischen Systems (TS), eingerichtet zum Ausführen eines Verfahrens nach einem der vorhergehenden Ansprüche.

12. Computerprogrammprodukt eingerichtet zum Ausführen eines Verfahrens nach einem der Ansprüche 1 bis 10.

13. Computerlesbares Speichermedium mit einem Computerprogrammprodukt nach Anspruch 12.
